# EUROPEAN PATENT APPLICATION

(11) **EP 3 364 062 A1**
(43) Date of publication of application: **22.08.2018**
(21) Application number: 17156487.5
(22) Date of filing: 16.02.2017
(51) Int. Cl.: F16C 35/00, F16C 35/02

(54) **BEARING HOUSING**

(71) Applicant: KML Europe 4s BVBA, 9200 Dendermonde (BE)
(72) Inventor: Van Geertruyen, Peter, B-9200 Dendermonde (BE); Steindamm, Jochen, B-9200 Dendermonde (BE)
(74) Representative: van der Krans, Arie

(57) **Abstract**

A bearing housing, comprising a baseplate, the baseplate having a rim, wherein the rim has an inner annular cavity for holding a bearing, and wherein the rim is provided with first screwable fastening means at its outer circumference a cap, wherein the cap is provided with second screwable fastening means corresponding with the first fastening means for cooperatively connecting the cap to the rim.

## Description

### BACKGROUND

Bearings in hygienic applications such as food processing or medical machinery require protection against influx of contaminants which may contaminate the interior of the machinery for processing, raw material half finished products or end products. In order to prevent bearings to come into contact with materials inside the machinery, bearings can arranged in a bearing housing at the exterior of such machinery. The bearings may be protected using caps which cover the bearing housing. Such caps may be applied over the bearing housing using for example a snap fit connection. Such a snap fit connection however may not be leak tight and may still sustain influx of contaminants. Moreover, ingress of materials from within the machinery may cause contamination of materials within the bearing and bearing housing hygiene.

### SUMMARY

It is therefore an object of the invention to provide a bearing housing which overcomes the problems and disadvantages as outlined above.

The object is achieved in a bearing housing, comprising a baseplate, the baseplate having a rim, wherein the rim has an inner annular cavity for holding a bearing, and wherein the rim is provided with first screwable fastening means at its outer circumference a cap, wherein the cap is provided with second screwable fastening means corresponding with the first fastening means for cooperatively connecting the cap to the rim.

The bearing holder can be attached to a housing of an apparatus or system by means of the base plate, the housing wherein processes can be performed which require optimal separation with the environment outside the housing, whilst a bearing is to be housed and held which provides support for an axle and a rotation or pivoting function. This allows for hygienic operation of the system and processes within the housing while preventing ingress of contaminants from the environment, while simultaneously preventing fluids involved in such system and process to leak from the housing. Moreover, the bearing within the housing is maintained contaminants free, thus ensuring its proper function and longevity.

In an embodiment, the first screwable fastening means comprise a screw thread, and wherein the second screwable fastening means comprise a screw thread corresponding to the screw thread of the first screwable fastening means. This allows the cap to be screed firmly on the rim providing a leak tight connection whilst simultaneously allowing easy access for maintenance, i.e. placing and/or replacing the bearing.

In an embodiment, the bearing housing further comprises a first seal ring accommodated within the baseplate opening, and arranged against an edge within the opening of the baseplate. The first seal ring protects the bearing from ingress of fluid and contaminants from the housing to which the bearing housing is mounted.

In an embodiment, the bearing housing further comprises a second seal ring accommodated between an inner edge of the cap and arranged against a top edge of the rim. This further protects the bearing from ingress of fluids and contaminants from the environment outside of the cap and rim of the bearing housing.

In an embodiment, the bearing housing further comprises mounting holes, for mounting the bearing housing on an object wall using bolts and nuts. These bolts and nuts provide a firm mount to a housing to which the bearing housing is to be mounted.

In an embodiment, the bearing housing further comprises washers for mounting between the bolt and baseplate and between the nuts and object's inner wall, wherein the washers comprise a sealing edge. The sealing edges of the washers protect from ingress of contaminants and fluids to the holes by which the base plate is mounted to the housing to which the bearing housing is to be mounted

In an embodiment, the baseplate comprises a groove and a seal accommodated within the groove. The seal protects from ingress of contaminants and fluids contact surface of the base plate and housing to which the bearing housing is mounted .

### BRIEF DESCRIPTION OF THE DRAWINGS

Fi. 1 shows an exploded view of a bearing housing according to an embodiment of the invention.
Fig. 2 shows a cross section of the bearing housing according to an embodiment of the invention.
Fig. 3 shows an isometric view of the bearing housing according to an embodiment of the invention.

### DETAILED DESCRIPTION OF EMBODIMENTS

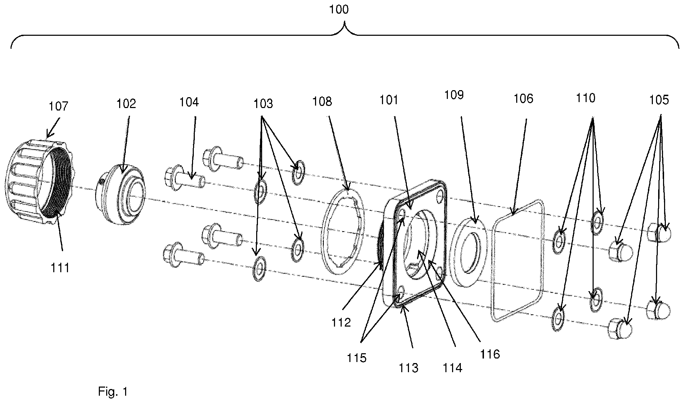

In fig. 1 various parts of an example of the bearing housing 100 are show. The base plate 101 has mounting holes for mounting to a system housing wherein processes can be performed which are to be kept sealed off from the environment outside of the system housing and from the interior of the bearing housing 100. The base plate 101 is provided with a rim 112 which has a screw thread at its outer circumference for mounting the cap 107 to the rim 112. A seal 108 can be arranged between the upper edge of the rim 112 and the interior of the cap 107 for completing the sealing off of the interior of the bearing housing 100 and the environment. A bearing 102 can be arranged within the rim 112, clamped close-fittingly by the inner wall 114 of the rim 112.

Opposite of the cap 107, within the opening of the base plate 101, another seal 109 can be arranged which seals off the bearing 102 when mounted within the rim 112 from fluids or contaminants from within the system housing to which the bearing housing 100 is mounted.

The base plate 101 is furthermore sealed off from the environment outside the housing 100 to which the bearing housing 100 is mounted and vice versa using a seal 106, which is embedded in an circumferential groove 113 near the edge of the baseplate 101 at the side facing the housing to which the bearing housing is mounted.

The base plate 101 can be mounted to the housing to which the bearing housing is to be mounted using bolts 104 with corresponding washers 103, 110 and nuts 105 arranged through the holes 115 of the base plate 101. The washers 103, 110 can be provided with an additional sealing edge.

The baseplate 101, rim 112, and cap 107 can be manufactured from solid materials such as plastics including nylon, PLA, PEEK, etc. or metal such as stainless steel, or combinations of plastics and metal, depending on applied fluids in the environment or from within the housing to which the bearing housing 100 is mounted. The seals 106, 108, 109 can be manufactured from durable elastic materials such as rubber, silicone and like materials depending on fluids applied.

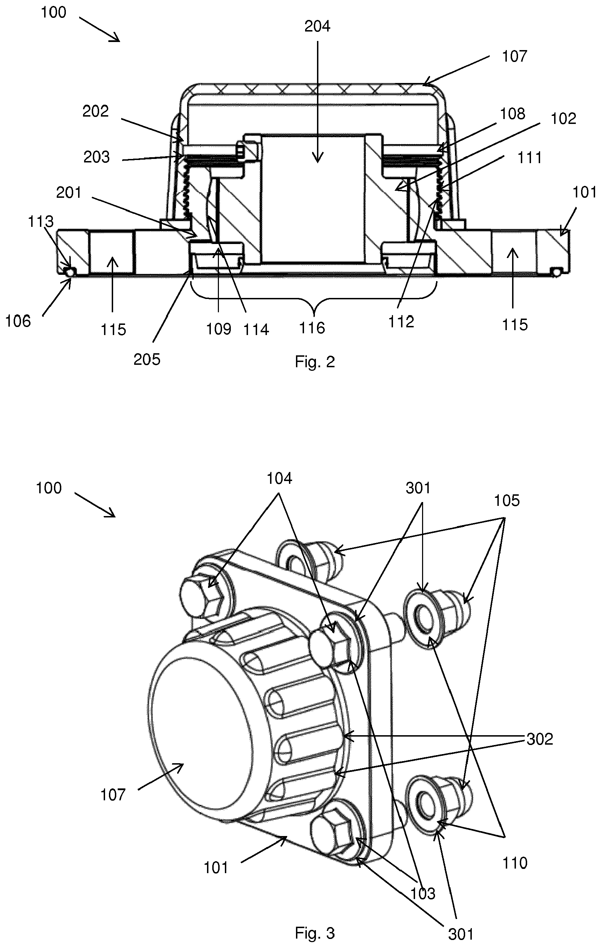

In the cross section of fig. 2 of the bearing housing 100 shown, wherein the bearing 102 is arranged within the inside of the rim 112, held firmly in place by the inner wall 114 of the rim 112. Within the bearing an annular space 204 is shown for receiving an end of an axle.

The seal 108 is shown arranged between edge 203 of the rim 112 and an inner edge 202 of the cap 107. The cap 107 is screwed on the rim 112 using screw thread 111. The skilled person will be aware of alternative screwable connections between the cap 107 and the rim 112, such as a twist/lock connection.

The seal 109 is arranged against the bearing 102, and can be kept in position by another seal ring 205 (not shown in fig. 1), arranged within the baseplate opening (116). The seal ring 205 can be manufactured from similar materials as the other seals 106, 108, 109, but also from solid materials. The seal 106 is shown arranged in groove 113.

In fig. 3 the bearing housing is shown in assembled condition, whwerein the cap 107 is optionally provided with ribs 302 for frim grip when screwing the cap 107 onto the rim 112. In fig. 3 the bolts 104 and nuts 105 are shown together with washers 103 and 110 respectively. The washers 103, 110 are provided with a sealing edge 301. The sealing edge 301 can be manufactured from like materials as the seals 106, 108, 109.

The embodiments described above are provided as examples only. Modifications can be made without departing from the scope of the claims set out below.

### REFERENCE NUMERALS

- 100: Bearing housing
- 101: Baseplate
- 102: Bearing
- 103: Washer
- 104: Bolt
- 105: Nut
- 106: Seal
- 107: Cap
- 108: Seal ring
- 109: Seal ring
- 110: Washer
- 111: Thread
- 112: Thread
- 113: Groove
- 114: Rim
- 115: Mounting hole
- 116: Baseplate opening
- 201: Edge
- 202: Edge
- 203: Rim top edge
- 204: Annular space for receiving an axle or shaft
- 205: Seal
- 301: Sealing edge
- 302: Rib

## Claims

1. Bearing housing (100), comprising
• a baseplate (101);
• the baseplate (101) having:
a rim (114), wherein the rim (114) has an inner annular cavity for holding bearing (102);
and wherein the rim (114) is provided with first screwable fastening means (112) at its outer circumference;
• a cap (107), wherein the cap (107) is provided with second screwable fastening means (111) corresponding with the first fastening means (112) for cooperatively connecting the cap (107) to the rim (114).

2. Bearing housing (100) according to claim 1, wherein the first screwable fastening means (112) comprise a screw thread, and wherein the second screwable fastening means (111, 112) comprise a screw thread corresponding to the screw thread of the first screwable fastening means.

3. Bearing housing (100) according to any of the preceding claims, further comprising a first seal ring (109) accommodated within the baseplate opening (116), and arranged against an edge (201) within the opening of the baseplate (101).

4. Bearing housing (100) according to any of the preceding claims, further comprising a second seal ring (108) accommodated between an inner edge (202) of the cap (107), and arranged against a top edge (203) of the rim (114).

5. Bearing housing (100) according to any of the preceding claims, further comprising mounting holes (115), for mounting the bearing housing (100) on an object wall using bolts (104) and nuts (105).

6. Bearing housing (100) according to claim 5, further comprising washers (103, 110) for mounting between the bolt and baseplate (101) and between the nuts (105) and object's inner wall, wherein the washers (103, 110) comprise a sealing edge (301).

7. Bearing housing (100) according to any of the preceding claims, wherein the baseplate comprises a groove (113) and a seal (106) accommodated within the groove (113).
